# EUROPEAN PATENT SPECIFICATION

(11) **EP 1 315 549 B1**
(45) Date of publication and mention of the grant of the patent: **29.08.2007**
(21) Application number: 01938017.9
(22) Date of filing: 08.06.2001
(51) Int. Cl.: B01D 53/84, A01K 1/00, F24F 3/16

(54) **METHOD AND AGGREGATE FOR CLEANING OF ROOM AIR, PARTICULARLY IN LIVESTOCK BUILDINGS**
VERFAHREN UND AGGREGAT ZUR REINIGUNG VON RAUMLUFT, BESONDERS IN VIEHSTÄLLEN
PROCEDE ET AGREGAT PERMETTANT DE NETTOYER L'AIR AMBIANT, PARTICULIEREMENT DANS DES BATIMENTS ABRITANT DU BETAIL

(30) Priority: 08.06.2000 DK 200000885
(43) Date of publication of application: 04.06.2003
(73) Proprietor: SKOV A/S, Glyngoere, 7870 Roslev (DK)
(72) Inventor: VENG, Niels, Skov, DK-7870 Roslev (DK)
(74) Representative: Nielsen, Leif
(86) International application number: PCT/DK2001/000399
(87) International publication number: WO 2001/093990

(56) References cited:
- DE-A1- 4 416 687
- NL-C1- 1 001 236
- US-A- 3 092 442
- US-A- 6 073 586

## Description

Within agriculture, animals convert food to meat, milk and eggs. This conversion also gives rise to some elements which are undesirable. Among other things, these are:
1. Dust
2. Odour
3. Ammonia

In many cases the animals are housed in livestock buildings, and the concentration of the above-mentioned undesirable elements becomes high. Since the animals also give off heat and must have oxygen, it is necessary for the buildings to be ventilated, whereby the undesired elements are transferred to the outdoor surroundings where they can be a problem in that:
1. Dust is a carrier of odour, virus and bacteria.
2. The odour is unpleasant for neighbours who cannot dry clothing outdoors.
3. Ammonia is harmful for certain biotopes, which change due to the extra supply of N, and also influences local and remote water environments.

Therefore, it will be necessary for these undesired elements to be removed completely or partly from the air in the building. Since what is involved is large amounts of air and small concentrations, the traditional methods are too expensive in both acquirement and operation. The traditional methods are:

### Filters

Filters retain dust and herewith some of the odour, but on the other hand ammonia is not retained. However, the large amounts of dust require frequent replacement of the filters. A porker requires an average of 50 m3/h of air with a concentration of 3 mg/m3. This is 150 mg per hour. Since the building are in use 24 hours a day throughout the whole year, there is 1.3 kg dust per sty per year. The pressure loss across the filter is also somewhat greater than the total system pressure of 10-40 Pa. This will considerably increase the electricity consumption.

### Chemical cleaning

Ammonia is a base and it can be collected in a weak acid. By letting the air pass a surface with low pH, the ammonia will be collected and the acid is gradually neutralised. Therefore, acid must constantly be added. Some of the dust will also be collected, and this will demand regular cleaning and give rise to the problem of its disposal. Use can also be made of clean water, since ammonia binds closely with water. But as the concentrations in the air are low, 5-20 ppm, the balance between ammonia in the air and ammonia dissolved in the water (NH⁺) means that only a small amount of ammonia will be bound in the water.

### Bio-scrubbers

Here, drops of water are sprayed into the air, whereby the dust coagulates and falls down. The dust can be removed as sludge. The blowing out of the small drops into the air gives rise to a high consumption of water. Moreover, the consumption of energy for atomising of the water is also a factor. The reuse of the water is difficult since it easily blocks the nozzles.

### Bio-filters (biobed)

Here, there is built up a 10-30 cm thick mat of wood chips, earth, peat and the like. The building air is pressed through, and the dust is retained due to the filter effect. If the mat can be held sufficiently moist, bacteria will decompose the dust so that only an ash part remains (primarily potassium and phosphor). If the mat is held moist, the ammonia is partly retained. The ammonia is converted to nitrate and free nitrogen. The odour is reduced if the mat is held sufficiently moist, in that bacteria are formed which convert the odour gases. However, it is difficult to hold the mat uniformly moist, and the accumulation of nitrate, phosphor and potassium means that the filter must be changed regularly. Due to the large content of nutrients, it must be handled as firm farmyard manure. When a new mat is established, at first there is no filter effect because the bacteria must first establish themselves. The mat also exercises resistance against the passage of the air, which means that use must be made of stronger ventilators with increased electricity consumption as a consequence. Finally, the mat is a paradise for rodents, which results in holes which provide a bypass for the air without cleaning.

### Combinations

In German publication DE 4416687 A1, there is disclosed a combination of biofilter and bioscrubber. The building air is moisturised via a nozzle arrangement, and when the air is on its way out of the building later it passes through a biobed which is held moist by a second nozzle arrangement. The surplus water runs to two or more tanks for clarification, so that the water can again be sprayed out through the nozzles.

In the introduction to the description, the same publication refers to information in a periodical HEA-Information fur die Landwirtschaft 2/1983 concerning the use of a biobed which cleans the air in livestock buildings, whereby this is commonly known. The invention is based on the biobed with nozzle systems being placed de-centrally and directly in a channel in the earth.

The system is encumbered with a number of weaknesses. The use of nozzles for spraying water on the biobed requires water of good quality to avoid stoppage of the nozzles. Therefore, it is necessary to have two tanks in order for the impurities to be able to precipitate.

In order to avoid the closing of the biobed with dust, a dust cleaning must be effected before the air reaches the biobed, and this requires the first nozzle arrangement.

The biobed itself consists of a "Füllkörperpackung", whereby it is described that different elements are filled into a holder with e.g. wire netting, so that they can be held in place.

### Biobed constructions

The hitherto-known materials for the building-up of biobeds are compared in "Minimum-Cos Biofilters for Reducing Odours and Other Aerial Emissions from Livestock Buildings: Part 1, Basic Airflow Aspects, Silsoe Research Institute, Bedford, MK45 4HS UK, published in the Journal of Agricultural Engineering Res. (1995) 62,203-214).

Table 1 provides a survey of the different materials for a biobed. They give a pressure loss of between 40 and 2000 Pa/m at an air speed of 0.05 m/s for a hydraulic diameter of up to 10 mm.

All of the materials mentioned are easily decomposed biologically, and they must therefore be gradually supplemented. This also means that the biobed is gradually closed firstly at the bottom. Consequently, it must be regenerated at regular intervals, where all materials are removed and new material added. Therefore, the cleaning effect will be small until new bacterial deposits have been built up.

The present invention is based on the recognition that as a very advantageous reactor element for cleaning of the building air by the re-circulation of this, use can be made of an element of the so-called "cooling-pad" type, which otherwise only finds application in moisture-cooling of fresh intake air for, e.g. livestock buildings. US-A-3092442 discloses the use of coding pads for air treatment.

The present invention addresses the above problems by providing a method as defined in claim 1 and an aggregate is defined in claim 6.

### Cooling pad as biobed

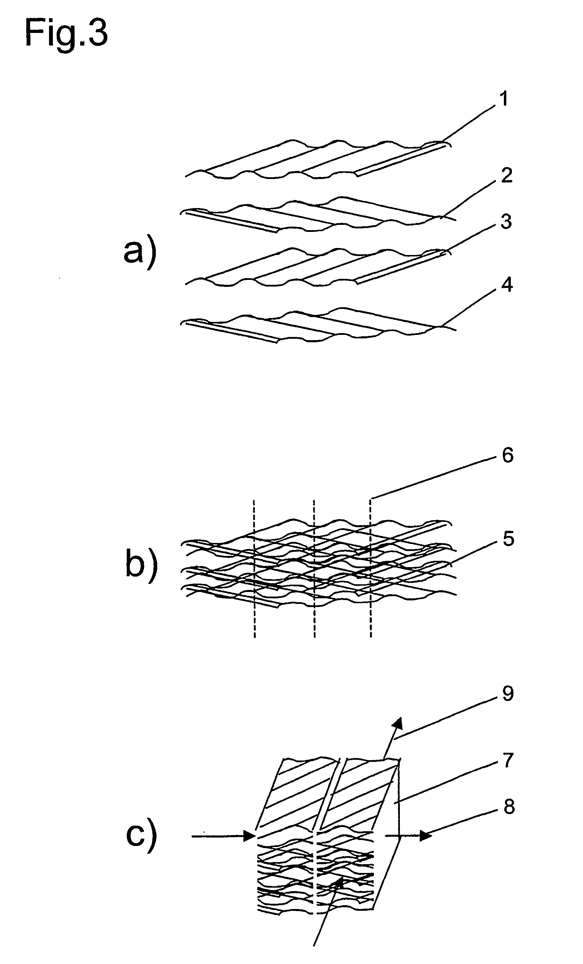

A cooling-pad consists of corrugated paper of impregnated cellulose alternately glued together at a certain angle. See fig. 3. A layer of corrugated paper (1) is at the top and the bottom of the corrugations glued together with a second layer but at another angle (2). A further layer (3) is glued on, but at the same angle as the layer (1). This is continued as shown at (4) until an adequate thickness has been reached, whereby a. block as shown at (5) has thus been achieved. The block is sawn through as shown at (6), which results in rectangular blocks as shown at (7). The block is oriented so that the air passes in the direction (8), and the water is introduced so that it runs in the direction (9).

A typical cooling-pad is Munter's 7060, and from the maker's data-sheet a 100mm-thick pad is seen to have a pressure loss of 12 Pa at a through-going air speed of 1.5 m/s. The pressure loss exponent for the pad is 1-7 (which lies closely to the 1.6 which is given for wood chips in the above-mentioned Table 1). The pressure loss can therefore be converted to (0.05/1.5)^{1.7} x 12/100mm = 0.37 Pa/m. This is thus 100 times less than earlier biobeds, which in practice means that work can be effected with very thick biobeds, which can thus have a correspondingly smaller surface. This naturally provides savings in the housing around the biobed. Alternatively, considerable savings can be achieved in the consumption of electricity for the ventilators.

Due to the construction of the pad, it can be held wet by adding a large amount of water to the top, after which the water distributes itself without dripping at the edges and at the same time the dust is washed out. Consequently, it is not necessary to have a nozzle arrangement prior to the biobed for the removal of the dust.

The large amount of water applied to the top means that work can be effected with a water pressure slightly above the lifting height for the water. This means that use can be made of much larger holes in a distributor pipe instead of small holes in the nozzles. It is thus not necessary to have several tanks for the cleaning of the water, a coarse sieve is sufficient. A biobed is built up of impregnated cellulose and is thus not decomposed by the bacteria. Therefore, it will have a lifetime of 10 years or longer.

On the surface of the pad there is formed a film of ammonium oxidising bacteria which converts the dissolved ammonia to nitrite. At the same time, only a minor part of the removed N is found again in the sump, and neither NOx's nor N₂O are formed. This is due to a special characteristic of the pad, in that its large and homogenous surface allows anaerobic bacteria to sit between the aerobic bacteria on the surface of the pad. These bacteria quickly de-nitrify the formed nitrite to fee nitrogen N₂ which can pass through the outer bacterial film without any reaction and which in turn does not apply any load on the surroundings.

The advantages of the cooling pad compared to patent publication DE 44 16687 A1 can therefore be listed as follows:

For the same contact with the air, the pressure loss is a hundredth part.

The pad can tolerate a large amount of water applied to the top, whereby it can wash out the dust Consequently, nozzles can be dispensed with.

The pad does not require nozzles but water on the top, which means that there is no need for a tank for clarification of the water.

The pad is impregnated, whereby it is not converted by the bacteria.

The pad provides the possibility for co-existence of both aerobic and anaerobic bacteria.

### General conditions for effective air cleaning

1. The air must closely pass a large surface with bacteria which can collect the odour gases.
2. The air must closely pass a wet surface so that the dust can be bound.
3. The media must be so open that it is not closed by the dust.
4. The air must closely pass a wet surface with water which is not in equilibrium with ammonia in gas form.
5. The dust must be able to be removed in a continuous manner.
6. The dust must be converted to inorganic salts (nitrite, nitrate, phosphor and potassium) by the bacteria.
7. The collected ammonia must be converted to nitrite and nitrate by means of bacteria, for which purpose plenty of oxygen is required.
8. The removal of nitrate, phosphor and potassium must be able to be effected without the process being stopped.
9. The pressure loss must be small compared with the pressure of the building

The above-mentioned points are fulfilled by a cooling pad where, in addition to the already-mentioned points, the following conditions exit :
1. It has a very large wet surface, 130 m2 per m3.
2. It is permeated by water so that collected dust can be washed out.
3. It is porous, so that bacteria can adhere firmly. The odour gases can hereby be absorbed by the bacteria.
4. It effectively oxidises the water.
5. It can directly reuse the water, since nozzles are not required.

The invention is illustrated in more detail in the drawing, where:

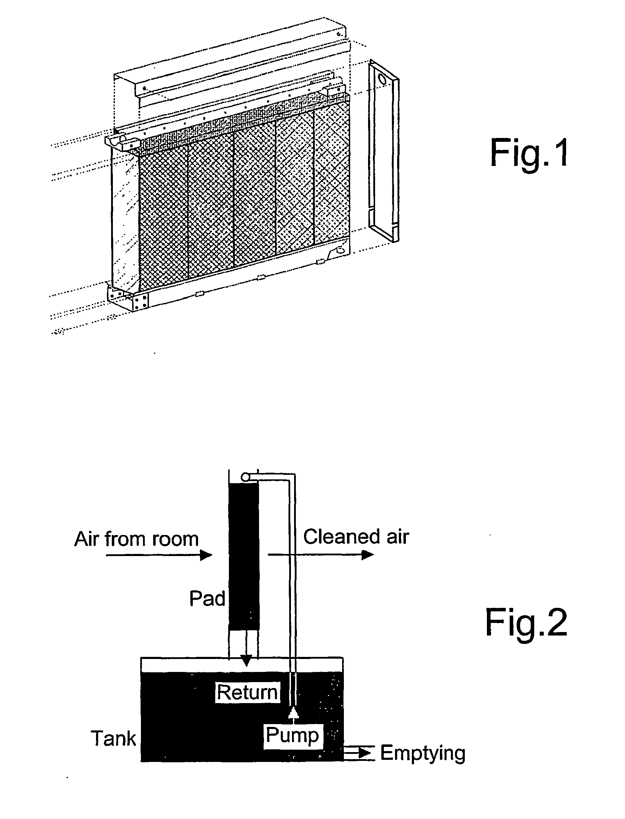

- fig. 1: shows a cooling pad mounted in a steel frame, where the distribution of water takes place at the top and there is a discharge channel in the bottom of the frame,
- fig. 2: is a schematic side view of an aggregate according to the invention, and
- fig. 3: illustrates the construction of a reactor element used in the pad.

Use is made of a tank of 0.02 to 0.1 litres per m³/air/hour for housing the necessary number of bacteria for conversion of the dust and the ammonia. A pump brings the water to the top of the pad, after which the water runs through the pad, carrying ammonia and dust with it. The bacteria will also adhere to the dust particles which are suspended in the water due to the stirring by the pump.

For a pigsty for 300 porkers, in North Europe 300 x 75 = 22500 m3/h is required. The tank can then be of 450 t0 2250 litres. If the tank is continuously emptied, the smallest tank can be used. If the tank is emptied at intervals, the largest tank must be used.

When the pad is used for the reduction of dust and ammonia, the dimensions must be such that retention times in the pad are from 0.1 to 0.3 seconds. With moderate concentrations of N in the water, this will be able to reduce the ammonia discharge by 50-70%.

The inconveniences of odour are especially great in connection with pig production. Therefore, when this is situated close to housing areas, it will be desirable to be to reduce the emission of air to the surroundings. The concentration of odour in the air in the sty is relatively low, and for this reason use must be made of long contact time before the odour molecules come past bacteria which can divide it into pieces. It is also seen in the present biobeds and plants with ozone cleaning how the retention time can be 5 seconds in order to achieve a reduction of approx. 90% (Low-cost Biofilters for Odor Control, Kevin Janni/Larry Jacobsen, The University of Minnesota, www.bae.umn.edu/extens/manure/). With the stated retention times, there is also seen a reduction of more than 90% of the ammonia.

By measuring the concentration of nitrite and nitrate, it can be determined when the water in the tank must be replaced. Since the ammonia and dust are converted to inorganically dissolved salts, the time of emptying can be determined by a measurement of the conductivity of the water. The removed water contains large amounts of N, and it is therefore valuable as fertiliser on the fields. It should therefore be collected in a tank (slurry tank) so that it can be applied to the plants during their growth period. Only a part of the water shall be removed, so that the system is not emptied of bacteria.

If the cleaning for the removal of odour is not sufficient, it can be supplemented with another method, e.g. ozone after the pad. Here, the air is free of dust particles, and thus the ozone molecules are not neutralised by the encounter with them. This will provide a far greater effect, and cleaning of ozone pipes is not necessary.

It is also possible to inoculate the tank with particularly effective nitrous bacteria, which are able to convert ammonia, to nitrite and nitrate at higher concentrations.

## Claims

1. Method for the cleaning of room air, in livestock buildings, primarily pigsties, by the circulation of the air through a cleaning aggregate, **characterised in that** said cleaning aggregate comprises a reactor element which element is buildt up of corrugated paper of impregnated cellulose alternately glued together at a certain angle, and means arranged above said reactor element which means applies water to the top of the reactor element, and a container for collecting the discharge water from the reactor element, and further means for re-circulating the water from the container to the moisturing means on top of the reactor clement, and further that the cleaning aggregate comprises means for pressing or drawing the room air through said reactor element.

2. Method according to claim 1, **characterised in that** the air is pressed or drawn through the reactor element with a capacity corresponding to a retention time in this element of a minimum of 0.1 seconds, preferably 0.1 - 0.3 seconds for the reduction of dust and ammonia and respectively 1-10 seconds for the reduction of odour in the air.

3. Method according to claim 1, **characterised in that** the water in said container is replaced at intervals with new water, preferably on the basis of a conductivity measurement, **in that** the nitrogen-containing water removed is used for application as fertilising water.

4. Method according to claim 1, **characterised in that** the air discharged from the reactor element is exposed with ozone for further reduction of odour in the air.

5. Method according to claim 1, **characterised in that** the water in said container is inoculated with relevant bacteria, especially nitrous bacteria, which can convert ammonia to nitrite and nitrate at relatively high concentrations.

6. Cleaning aggregate for the execution of the method according to claim 1, **characterised in that** it comprises a reactor element which element is built up of corrugated paper of impregnated cellulose alternately glued together at a certain angle, and means for circulation of the room air through this element, and means arranged above said element for the moistening of this element with running water and a container for the collection of discharge water from the element and means for re-circulation of the water to said means for moisturing arranged above said element.

7. Aggregate according to claim 6, **characterised in that** the container is of a size in the order of 0.02 - 0.1 litre per m³/air/hour.

8. Aggregate according to claim 6, **characterised in that** in connection with the container there are means for the detection of the conductivity of the water, and the emission of a signal at a determined maximum value of the conductivity.

## Patentansprüche

1. Ein Verfahren zum Reinigen von Raumluft in Tiergebäuden, vor allem Schweineställen, durch die Zirkulation von Luft durch ein Reinigungsaggregat, **dadurch gekennzeichnet, dass** das Reinigungsaggregat ein Reaktorelement, das aus gewelltem Papier aus imprägnierter Zellulose aufgebaut ist, das abwechselnd in einem bestimmten Winkel zusammengeklebt ist, und Mittel, die über dem Reaktorelement angeordnet sind, welche Mittel Wasser oben auf das Reaktorelement zuführen, und einen Behälter zum Sammeln des Abflusswassers aus dem Reaktorelement und weitere Mittel zur Re-Zirkulation des Wassers aus dem Behälter zum Befeuchtungsmittel oben auf dem Reaktorelement, umfasst, und ferner, dass das Reinigungsaggregat Mittel zum Pressen oder Anziehen der Raumluft durch das Reaktorelement hindurch umfasst.

2. Verfahren gemäß Anspruch 1, **dadurch gekennzeichnet, dass** die Luft durch das Reaktorelement hindurch mit einer Kapazität entsprechend einer Verweilzeit in diesem Element von minimal 0,1 Sekunden, bevorzugt 0,1 - 0,3 Sekunden, zur Reduzierung von Staub und Ammoniak, und jeweils 1 - 10 Sekunden zur Reduzierung des Geruchs in der Luft gepresst oder angezogen wird.

3. Verfahren gemäß Anspruch 1, **dadurch gekennzeichnet, dass** das Wasser in dem Behälter in Intervallen mit neuem Wasser, bevorzugt bestimmt durch Leitfähigkeitsmessungen, ersetzt wird, wobei das entfernte stickstoffhaltige Wasser zur Verwendung als Düngerwasser benutzt wird.

4. Verfahren gemäß Anspruch 1, **dadurch gekennzeichnet, dass** die Abluft aus dem Reaktorelement zur weiteren Reduzierung des Geruchs in der Luft Ozon ausgesetzt wird.

5. Verfahren gemäß Anspruch 1, **dadurch gekennzeichnet, dass** das Wasser in dem Behälter mit relevanten Bakterien, insbesondere Nitrobakterien, die Ammoniak zu Nitrit und Nitrat bei relativ hohen Konzentrationen umwandeln können, beimpft wird.

6. Reinigungsaggregat zur Ausführung des Verfahrens gemäß Anspruch 1, **dadurch gekennzeichnet, dass** es ein Reaktorelement, das aus gewelltem Papier aus imprägnierter Zellulose aufgebaut ist, das abwechselnd in einem bestimmten Winkel zusammengeklebt ist, und Mittel zur Zirkulation der Raumluft durch dieses Element hindurch und Mittel, die über dem Reaktorelement angeordnet sind, zum Befeuchten dieses Elements mit laufendem Wasser und einen Behälter zum Sammeln des Abflusswassers aus dem Element und Mittel zur Re-Zirkulation des Wassers zu den Mitteln zum Befeuchten, die über dem Reaktorelement angeordnet sind, umfasst.

7. Aggregat gemäß Anspruch 6, **dadurch gekennzeichnet, dass** der Behälter ein Ausmaß in der Größenordnung von 0,02 - 0,1 Liter pro m³/Luft/Stunde hat.

8. Aggregat gemäß Anspruch 6, **dadurch gekennzeichnet, dass** in Verbindung mit dem Behälter Mittel zur Ermittlung der Leitfähigkeit des Wassers und zur Aussendung eines Signals bei einer festgelegten maximalen Größe der Leitfähigkeit vorhanden sind.

## Revendications

1. Procédé destiné à purifier l'air ambiant dans des bâtiments abritant du bétail, principalement les porcheries, en faisant circuler l'air à travers un agrégat de nettoyage, **caractérisé en ce que** ledit agrégat de nettoyage comprend un élément de réacteur qui est constitué de papiers ondulés composés de cellulose imprégnée, collés ensemble en alternance selon un certain angle, et un moyen aménagé au-dessus dudit élément de réacteur, qui délivre de l'eau sur la partie supérieure de l'élément de réacteur, et un récipient pour recueillir l'eau usée de l'élément de réacteur, et un autre moyen pour effectuer le recyclage de l'eau depuis le récipient au dispositif humidificateur au sommet de l'élément de réacteur, et **en ce que** l'agrégat de nettoyage comprend un moyen pour propulser ou aspirer l'air ambiant à travers ledit élément de réacteur.

2. Procédé selon la revendication 1, **caractérisé en ce que** l'air est propulsé ou aspiré à travers l'élément de réacteur selon une capacité correspondant à un temps de rétention dans cet élément d'au minimum 0,1 seconde, de préférence, de 0,1 à 0,3 seconde, pour diminuer la quantité de poussière et d'ammoniac et, respectivement, de 1 à 10 secondes pour réduire les odeurs dans l'air.

3. Procédé selon la revendication 1, **caractérisé en ce que** l'eau contenue dans ledit récipient est remplacée à certains intervalles de temps par de l'eau fraîche, de préférence, sur la base d'une mesure de conductivité, et **en ce que** l'on utilise l'eau éliminée, contenant de l'azote, pour une application comme eau de fertilisation.

4. Procédé selon la revendication 1, **caractérisé en ce que** l'air évacué de l'élément de réacteur est exposé à de l'ozone pour réduire également les odeurs dans l'air.

5. Procédé selon la revendication 1, **caractérisé en ce que** l'eau contenue dans ledit récipient est inoculée avec des bactéries pertinentes, en particulier, des bactéries nitreuses, qui peuvent convertir l'ammoniac en nitrite et en nitrate à des concentrations relativement élevées.

6. Agrégat de nettoyage pour l'exécution du procédé selon la revendication 1, **caractérisé en ce qu'**il comprend un élément de réacteur qui est formé de papiers ondulés composés de cellulose imprégnée, collés ensemble en alternance selon un certain angle, et un moyen pour faire circuler l'air ambiant à travers cet élément, ainsi qu'un moyen aménagé au-dessus dudit élément pour humidifier l'élément en question avec de l'eau courante, et un récipient pour recueillir l'eau usée de l'élément et un moyen pour recycler l'eau audit moyen humidificateur aménagé au-dessus dudit élément.

7. Agrégat selon la revendication 6, **caractérisé en ce que** le récipient présente une capacité de l'ordre de 0,02 à 0,1 litre par m³/air/heure.

8. Agrégat selon la revendication 6, **caractérisé en ce que**, concernant le récipient, des moyens sont aménagés pour permettre la détection de la conductivité de l'eau et l'émission d'un signal à une valeur maximale déterminée de conductivité.
